# EUROPÄISCHE PATENTANMELDUNG

(11) **EP 0 940 189 A2**
(43) Veröffentlichungstag der Anmeldung: **08.09.1999**
(21) Anmeldenummer: 99101218.8
(22) Anmeldetag: 22.01.1999
(51) Int. Cl.: B05B 7/14

(54) **Pulverbeschichtungsanlage und -verfahren zum Speisen und Mischen von Pulver in einer Beschichtungsanlage**

(30) Priorität: 02.03.1998 DE 19808765
(71) Anmelder: WAGNER INTERNATIONAL AG, 9450 Altstätten (CH)
(72) Erfinder: Adams, Horst Dr., 88149 Nonnenhorn (DE)
(74) Vertreter: Liesegang, Eva

(57) **Zusammenfassung**

Die Erfindung sieht eine Pulverbeschichtungsanlage vor, mit einem Frischpulverbehälter (10) zum Aufnehmen von frischem Pulver, einem Rückgewinnungsbehälter (12) zum Aufnehmen von aus dem Beschichtungsvorgang zurückgewonnenem Pulver und einem Mischbehälter (14), der über eine erste Pulverleitung und eine zweite Pulverleitung mit dem Frischpulverbehälter (10) bzw. dem Rückgewinnungsbehälter (12) verbunden ist, und mit einer Steuereinrichtung zum Einstellen der Pulvermengenströme in der ersten und der zweiten Pulverleitung in einem bestimmten Verhältnis aus frischem und zurückgewonnenem Pulver. Es ist ein erster Pulvermengensensor (18) in oder an der ersten Pulverleitung und ein zweiter Pulvermengensensor (22) in oder an der zweiten Pulverleitung vorgesehen, wobei die Steuereinrichtung mit dem ersten und dem zweiten Pulvermengensensor (18,22) gekoppelt ist, um das Verhältnis der Pulvermengenströme in der ersten und der zweiten Pulverleitung einzustellen. Zunächst wird über die erste Pulverleitung Frischpulver in den Mischbehälter (14) gespeist, bis eine vorgegebene Füllhöhe erreicht ist; das Frischpulver wird anschließend im wesentlichen vollständig zu dem Beschichtungsgerät weitergefördert und versprüht; übersprühtes Pulver wird gesammelt und dem Rückgewinnungsbehälter (12) zugeführt; und wenn in dem Rückgewinnungsbehälter (12) eine vorgegebene Füllhöhe erreicht ist, werden zurückgewonnenes Pulver und Frischpulver im wesentlichen gleichzeitig in den Mischbehälter (14) gespeist.

## Beschreibung

Die Erfindung betrifft eine Pulverbeschichtungsanlage und ein Verfahren zum Speisen von Pulver zu wenigstens einem Beschichtungsgerät, bei dem frisches Pulver und zurückgewonnenes Pulver in einem bestimmten Verhältnis gemischt werden und das so gebildete Pulvergemisch dem Beschichtungsgerät zugeführt wird.

In der Pulverbeschichtungstechnik ist es üblich, übersprühtes Pulver, das nicht an dem zu beschichtenden Gegenstand haftet, z.B. mittels einer Absaugeinrichtung zu sammeln, um das Pulver zurückzugewinnen und in einem Pulverkreislauf dem Beschichtungsvorgang wieder zuzuführen. Bei Pulverbeschichtungsanlagen, die Beschichtungen höchster Qualität erzeugen sollen, ist es wichtig zu wissen, in welchem Verhältnis frisches und zurückgewonnenes Pulver zu dem Versorgungsbehälter der Pulverbeschichtungspistolen geführt wird. Ein Grund liegt in den unterschiedlichen Kornspektren (d.h. der Korngrößenverteilung) der Pulverpartikel bei frischem und bei zurückgewonnenem Pulver. Wenn die Absaugeinrichtung z.B. mit einem Zyklon arbeitet, wie er in der deutschen Patentanmeldung 197 20 005 beschrieben ist, werden die Feinstanteile aus dem Pulver gefiltert, so daß das zurückgewonnene Pulver ein gröberes mittleres Kornspektrum aufweist als das frische Pulver. Um ein gewünschtes Kornspektrum zu erhalten, sollte daher das Mischungsverhältnis von frischem zu zurückgewonnenem Pulver einstellbar sein.

Ein relativ kompliziertes Verfahren zu Messung und Regelung dieses Mischungsverhältnisses ist in der DE 195 81 792 C1 beschrieben. Bei diesem Verfahren werden frisches und zurückgewonnenes Pulver aus einem Hauptbehälter bzw. einem Regeneratbehälter in einem ausgewählten Verhältnis in einen Mischbehälter transportiert und dort durchmischt. Das Mischverhältnis wird ermittelt, indem die Partikelgrößenverteilung des im Mischbehälter enthaltenen Pulvers mathematisch vorhergesagt wird, damit die Feinanteile des Pulvers in dem Mischbehälter einen vorgegebenen maximalen Prozentsatz nicht überschreiten. Die Ermittlung des Mischungsverhältnisses erfolgt aufgrund von Messungen der Partikelgrößenverteilung des reinen Pulverbeschichtungsmaterials und der Partikelgrößenverteilung des Regenerats.

Bei einer weiteren, in der DE 195 81 792 C1 beschriebenen Ausführungsform werden das reine Pulver und das übersprühte Pulver von dem Hauptbehälter und dem Regeneratbehälter dem Mischbehälter in einem ausgewählten Verhältnis zugeführt, bei dem die Füllstände im Hauptbehälter bzw. im Regeneratbehälter nicht unter eine minimale Füllhöhe fallen. Zusätzlich ist eine Ausgleichsleitung zwischen Regeneratbehälter und Hauptbehälter vorgesehen, um den gewünschten minimalen Füllstand aufrecht zu erhalten. Die Füllstände im Haupt- und im Regeneratbehälter werden mittels Kraftmeßdosen erfaßt, welche die Behälter tragen.

Die Erfindung hat zur Aufgabe, eine Pulverbeschichtungsanlage und ein Verfahren zum Speisen von Pulver zu wenigstens einem Beschichtungsgerät in einer Pulverbeschichtungsanlage anzugeben, bei denen frisches Pulver und zurückgewonnenes Pulver gemischt und dem Beschichtungsgerät zugeführt werden, wobei das richtige Verhältnis zwischen frischem und zurückgewonnenem Pulver auf unkomplizierte und schnelle Weise ermittelt und eingestellt werden soll.

Diese Aufgabe wird durch eine Pulverbeschichtungsanlage mit den Merkmalen von Anspruch 1 und durch ein Verfahren mit den Merkmalen von Anspruch 9 gelöst.

Gemäß eines ersten Aspekts der Erfindung wird eine Pulverbeschichtungsanlage vorgesehen, die einen Frischpulverbehälter zum Aufnehmen von frischem Pulver, einen Rückgewinnungsbehälter zum Aufhehmen von aus dem Beschichtungsvorgang zurückgewonnenem Pulver und einen Mischbehälter aufweist, der über eine erste Pulverleitung mit dem Frischpulverbehälter bzw. dem Rückgewinnungspulverbehälter verbunden ist. Eine Steuereinrichtung dient zum Einstellen der Pulvermengenströme in der ersten und der zweiten Pulverleitung in einem bestimmten Verhältnis, wobei ein erster Pulvermengensensor an der ersten Pulverleitung und ein zweiter Pulvermengensensor an der zweiten Pulverleitung vorgesehen ist und die Steuereinrichtung mit dem ersten und dem zweiten Pulvermengensensor gekoppelt ist, um das Verhältnis der Pulvermengenströme in der ersten und der zweiten Pulverleitung zu erfassen und einzustellen. Durch direktes Messen der dem Mischbehälter zugeführten Pulvermengenströme kann das aktuelle Mischungsverhältnis unmittelbar und auf einfache Weise ermittelt und demzufolge gesteuert werden.

Vorzugsweise wird auch der den Mischbehälter verlassende Pulvermengenstrom erfaßt; zu diesem Zweck ist eine dritten Pulverleitung zum Speisen von Beschichtungspulver aus dem Mischbehälter zu wenigstens einem Beschichtungsgerät vorgesehen, an der ein dritter Pulvermengensensor angeordnet ist. Die Steuereinrichtung ist in diesem Fall auch mit dem dritten Pulvermengensensor gekoppelt und kann die Pulver-Füllhöhe in dem Mischbehälter abhängig von den Signalen von dem ersten, dem zweiten und dem dritten Pulvermengensensor aus der Differenz der eingehenden und ausgehenden Pulvermengen ermitteln. Alternativ kann der Füllstand im Mischbehälter direkt durch einen Pulverhöhensensor in dem Mischbehälter erfaßt werden.

Weiterhin ist bei der Erfindung vorgesehen, abhängig von den Signalen von dem dritten Pulvermengensensor und einem vierten Pulvermengensensor, der in einer Rückführungsleitung von einer Rückgewinnungsanlage zum Rückgewinnungsbehälter liegt, einen Maximalwert für das Verhältnis der Mengenströme des frischen und des zurückgewonnenen Pulvers abzuleiten. Mit anderen Worten, es wird das Verhältnis der Menge des insgesamt zum Beschichtungsgerät geförderten Pulvers zur Menge des zurückgewonnenen Pulvers ermittelt, um den Anteil des verfügbaren Rückgewinnungspulvers zum Gesamtpulverbedarf zu kennen, und um im wesentlichen das gesamte zurückgewonnene Pulver wieder in den Beschichtungskreislauf zu führen, wenn dies im Hinblick auf die Beschichtungsqualität hinnehmbar ist.

Gemäß eines weiteren Aspekts der Erfindung ist eine Pulverbeschichtungsanlage vorgesehen, die eine Einrichtung zum Prüfen der Oberfläche eines beschichteten Gegenstandes hat, welche ein Oberflächen-Meßsignal erzeugt, das an eine Regeleinrichtung übergeben wird, um den von dem Mischbehälter kommenden Pulvermengenstrom zu wenigstens einem Beschichtungsgerät abhängig von dem Oberflächen-Meßsignal zu regeln. Die Regeleinrichtung empfängt auch ein Pulvermengen-Istsignal, das die Menge des vom Mischbehälter zum Beschichtungsgerät geförderten Pulvers wiedergibt. Eine für die Erfindung geeignete Regeleinrichtung ist in der deutschen Patentanmeldung 197 13 668 beschrieben, auf die Bezug genommen wird.

Die Einrichtung zum Prüfen der Oberfläche ist vorzugsweise eine Schichtdikenmeßeinrichtung. Geeignete Schichtdickenmeßeinrichtungen sind in den deutschen Patentanmeldungen 196 06 453 und 196 23 121 beschrieben, auf die Bezug genommen wird. Die Oberflächenprüfeinrichtung kann auch eine Einrichtung zum Ermitteln der Beschaffenheit einer Werkstückoberfläche sein, wie sie in der deutschen Patentanmeldung 196 22 429 beschrieben ist, auf die Bezug genommen wird.

Die Erfindung sieht ferner ein Verfahren zum Speisen von Pulver zu wenigstens einem Beschichtungsgerät in einer Pulverbeschichtungsanlage vor, bei dem frisches Pulver und zurückgewonnenes Pulver über eine erste bzw. eine zweite Pulverleitung in einen Mischbehälter geführt und in einem bestimmten Verhältnis gemischt werden, und bei dem das so gebildete Pulvergemisch dem Beschichtungsgerät zugeführt wird, wobei die Pulvermengenströme in der ersten und der zweiten Pulverleitung erfaßt werden, um das Verhältnis von frischem zu zurückgewonnenem Pulver einzustellen.

Das erfindungsgemäße Verfahren läuft in der Praxis vorzugsweise wie folgt ab. Zunächst wird über die erste Pulverleitung frisches Pulver in den Mischbehälter gespeist, bis eine vorgegebene Füllhöhe erreicht ist; das Frischpulver wird anschließend im wesentlichen vollständig zu dem Beschichtungsgerät weitergefördert und versprüht; übersprühtes Pulver wird gesammelt und einem Rückgewinnungsbehälter zugeführt; wenn in dem Rückgewinnungsbehälter eine vorgegebene Höhe erreicht ist, werden das zurückgewonnene Pulver und das Frischpulver in dem vorgegebenen Verhältnis im wesentlichen gleichzeitig in den Mischbehälter gespeist.

Die Erfindung ist im folgenden anhand einer bevorzugten Ausführungsform mit Bezug auf die Zeichnung näher erläutert. In den Figuren zeigen:
- Figur 1: eine schematische Darstellung des Pulverkreislaufes in der erfindungsgemäßen Pulverbeschichtungsanlage; und
- Figur 2: eine schematische Darstellung einer bevorzugten Ausführungsform der erfindungsgemäßen Pulverbeschichtungsanlage.

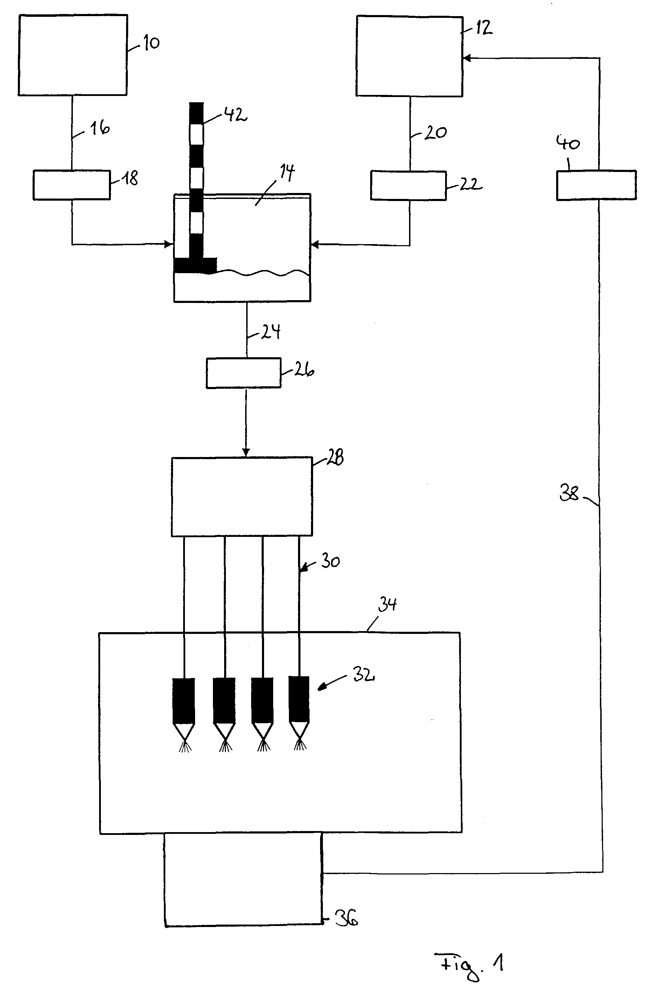

In Figur 1 sind ein Frischpulverbehälter 10 für frisches Beschichtungspulver, ein Rückgewinnungsbehälter 12 für zurückgewonnenes Beschichtungspulver und ein Mischbehälter 14 gezeigt. Der Frischpulverbehälter 10 und der Mischbehälter 14 sind über eine erste Leitung 16 verbunden, in der ein erster Pulvermengensensor 18 liegt; und der Rückgewinnungsbehälter 12 und der Mischbehälter 14 sind über eine zweite Leitung 20 verbunden, in der ein zweiter Pulvermengensensor 22 liegt. Der Mischbehälter 14 ist über eine dritte Pulverleitung 24, in der ein dritter Pulvermengensensor 26 angeordnet ist, mit einem Pistolenversorgungsbehälter 28 verbunden. Von dem Pistolenversorgungsbehälter 28 führen mehrere Pulverspeiseleitungen 30 zu mehreren Beschichtungspistolen 32 in einer Beschichtungskabine 34. An der Beschichtungskabine 34 ist eine Rückgewinnungsanlage 36 für übersprühtes Pulver vorgesehen. Die Rückgewinnungsanlage kann z.B. eine Absaugeinrichtung mit einem Zyklonabscheider sein, wie sie in der deutschen Patentanmeldung 197 20 005 beschrieben ist, auf die Bezug genommen wird. Von der Rückgewinnungsanlage 36 führt eine vierte Pulverleitung 38 zum Rückgewinnungsbehälter 12, in der ein vierter Pulvermengensensor angeordnet ist. Schließlich ist noch im Mischbehälter 14 eine Niveausonde 42 zur Erfassung der Pulverfüllhöhe im Mischbehälter vorgesehen.

Die Pulvermengensensoren 18, 22, 26 und 40 können wie in den deutschen Patentanmeldungen 44 06 046 und 196 50 112 beschrieben ausgebildet sein. Aufdiese Anmeldungen wird Bezug genommen.

Die Förderung von Frischpulver, zurückgewonnenem Pulver und gemischten Pulver durch die Pulverleitungen 16, 20, 24, 30 und 38 erfolgt über pneumatische Födereinrichtungen (nicht gezeigt), die Luftmengenregler enthalten, wie sie z.B. in der deutschen Patentanmeldung 197 13 668 beschrieben sind, auf die Bezug genommen wurde.

Der in Figur 1 gezeigte Pulverkreislauf arbeitet in einer bevorzugten Ausführungsform der Erfindung wie folgt. Aus dem Frischpulverbehälter 10 wird frisches Pulver über die erste Pulverleitung 16 in den Mischbehälter 14 gefordert. Die geförderte Pulvermenge wird von dem Pulvermengensensor 18 gemessen. Die Niveausonde 42 in dem Mischbehälter mißt den Füllstand im Behälter, wobei der Mischbehälter 14 zunächst nur zu etwa 50% gefüllt wird; dann wird die Zufuhr von Frischpulver zum Mischbehälter 14 abgestellt.

Aus dem Mischbehälter 14 wird das Pulver weitgehend vollständig über die dritte Pulverleitung 24 in den Pulverversorgungsbehälter 28 gefördert. Die geförderte Pulvermenge wird mit dem Pulvermengensensor 26 erfaßt. Wenn der Mischbehälter 14 vollständig entleert ist, wird die Förderung zum Pistolenversorgungsbehälter 28 abgestellt.

Nun beginnen die Sprühpistolen 32 in der Beschichtungskabine 34 das Pulver aus dem Pistolenversorgungsbehälter 28 zu versprühen, während ein Werkstück durch die Beschichtungskabine 34 geführt wird. Beschichtungspulver, das nicht an dem Werkstück haften bleibt, wird über die Rückgewinnungsanlage 36, z.B eine Absauganlage mit einem Zyklonabscheider oder einem Filter, zurückgewonnen und über die vierte Pulverleitung 38 in den Rückgewinnungsbehälter 12 gefördert. Die durch die vierte Pulverleitung 38 zurückgeförderte Pulvermenge wird von dem vierten Pulvermengensensor 40 erfaßt. Sobald eine ausreichende Pulvermenge im Rückgewinnungsbehälter vorhanden ist, wird die Pulverförderung aus dem Rückgewinnungsbehälter 12 durch die zweite Pulverleitung 20 in den Mischbehäler 14 eingeschaltet. Die durch die zweite Pulverleitung 20 geförderte Pulvermenge wird mit dem zweiten Pulvermengensensor 22 erfaßt.

Im wesentlichen gleichzeitig mit dem Einschalten der Pulverförderung aus dem Rückgewinnungsbehälter 12 in den Mischbehälter 14 wird auch die Pulverförderung aus dem Frischpulverbehälter 10 durch die erste Pulverleitung 16 in den Mischbehälter 14 eingeschaltet.

Mit Hilfe des ersten und des zweiten Pulvermengensensors 18, 22 können die Mengen des geförderten frischen und des zurückgewonnenen Pulvers erfaßt und verglichen werden, um die Fördermengen so einzustellen, daß ein wählbares, konstantes Mischungsverhältnis aus dem frischen und dem zurückgewonnenen Pulver eingehalten wird.

Das Mischungsverhältnis kann auf der Grundlage verschiedener Überlegungen gewählt werden. Wie in der Einleitung erläutert, haben die Pulverpartikel des frischen Pulvers und des zurückgewonnenen Pulvers unterschiedliche Kornspektren, d.h. Korngrößenverteilungen, weil z.B. ein Zyklonabscheider der Rückgewinnungsanlage die Feinstanteile aus dem Pulver ausfiltert. Da der Typ der Rückgewinnungsanlage in der Praxis bekannt ist, kann aufgrund von Erfahrungswerten ein Mischungsverhältnis vorgegeben werden, z.B. 1:3 (zurückgewonnenes zu frischem Pulver), mit dem noch ein akzeptables Gesamtkornspektrum des Pulvergemisches erhalten wird. Das maximale Mischungsverhältnis, d.h. der maximale Anteil an zurückgewonnenem Pulver, hängt vom Auftragswirkungsgrad in der Beschichtungskabine 27 ab. Das heißt, bei schlechtem Auftragswirkungsgrad wird eine große Menge übersprühten Pulvers (bis zu 50 % des Frischpulver) in die Rückgewinnungsanlage 36 gelangen. Bei gutem Auftragswirkungsgrad beträgt die Menge des zurückgewonnenen Pulvers etwa nur 20 bis 30 % der zugeführten Frischpulvermenge. Ein weiteres Kriterium zur Einstellung des Verhältnisses aus zurückgewonnenem und frischem Pulver kann daher sein, möglichst das gesamte zurückgewonnene Beschichtungspulver in den Pulverkreislauf zurückzuführen und nur so viel frisches Pulver zu ergänzen, wie nötig ist, damit eine ausreichende Gesamtpulvermenge zur Verfügung steht.

Der Auftagswirkungsgrad kann durch einen Vergleich der Pulvermengenmeßwerte des dritten Pulvermengensensors 26 und des vierten Pulvermengensensors 40 ermittelt werden, die ein Maß für das Verhältnis von insgesamt versprühtem Pulver zu zurückgewonnenem Pulver liefern. Im Stand der Technik wurden zur Bestimmung des Auftragswirkungsgrades die versprühte Pulvermenge (mit einer Waage am Pulverbehälter) sowie das Werkstück vor und nach der Beschichtung gewogen. Im Gegensatz dazu bietet die Erfindung eine einfacher und on-line realisierbare Möglichkeit der Ermittlung des Auftragswirkungsgrades.

Die Einstellung des Mischungsverhältnisses zwischen frischem und zurückgewonnenem Pulver kann manuell oder automatisch erfolgen, wobei im automatischen Betrieb die Signale von den Pulvermengensensoren 24 und 40 in einer Steuereinrichtung (nicht gezeigt) ausgewertet und die Fördermengen über Luftmengenregler an den pneumatischen Fördereinrichtungen (nicht gezeigt) eingestellt werden.

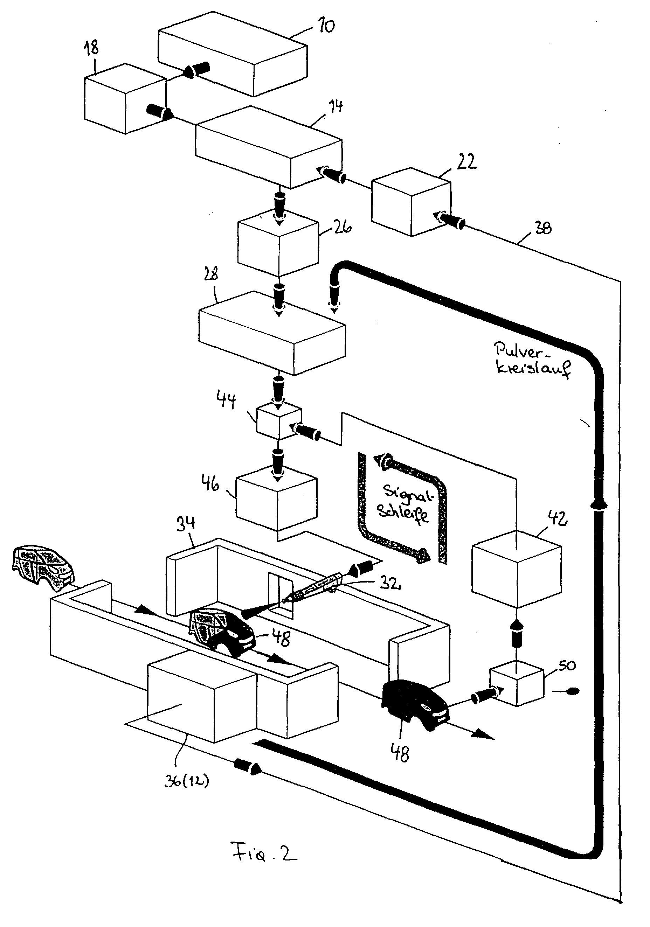

Bei einer alternativen Ausführungsform der Erfindung kann für die Einstellung des Mischungsverhältnisses zusätzlich die Oberflächenbeschaffenheit oder Schichtdicke eines beschichteten Werkstückes berücksichtigt werden, wie genauer noch mit Bezug auf Figur 2 beschrieben ist.

Mit Hilfe der Niveausonde 42 wird der Füllstand im Mischbehälter 14 überwacht, so daß er durch gleichzeitige Regelung der Pulverzufuhr aus dem Frischpulverbehälter 10 und dem Rückgewinnungsbehälter 12, bei konstantem Verhältnis der beiden Fördermengen auf einem konstanten Niveau gehalten werden kann. Aufdiese Weise läßt sich im Mischbehälter 14 leicht ein konstantes Mischungsverhältnis aus frischem und zurückgewonnenem Pulver aufrechterhalten. Das optimal gemischte Pulver wird dann im Dauerbetrieb über die dritte Pulverleitung 24 dem Pistolenversorgungsbehälter 28 zugeführt und von dort über die Sprühpistolen 32 versprüht.

Im Dauerbetrieb ist die Funktion der Niveausonde 42 erläßlich, weil über die Pulvermengensensoren 18, 22, 24 in der ersten, zweiten bzw. dritten Pulverleitung 16, 20, 24 alle Zu- und Abflüsse des Mischbehälters 14 gemessen werden können, so daß durch eine geeignete Auswertung dieser Signale ein konstanter Füllstand und ein gewünschtes Mischungsverhältnis gewährleistet werden können.

In der Praxis ist die Niveausonde 42 somit nur bei der ersten Befüllung des Mischbehälters 14 notwendig, um sicherzustellen, daß dieser nicht überfüllt wird. Hierzu wird in der Regel die Mengenmessung (in g/min) des Pulvermengensensors 18 nicht ausreichen, weil Beschichtungspulver sehr unterschiedliche spezifische Gewichte haben und auch die Volumenzunahme durch die Fluidisierung im Mischbehälter berücksichtigt werden muß, die in jedem Pulverförderbehälter notwendig ist und insbesondere für eine gute Durchmischung des Pulvers im Mischbehälter 14 sorgt, wie der Fachmann weiß.

Die Erfindung sieht somit ein sehr einfaches und gleichwohl effektives System zur Wiederverwertung von zurückgewonnenen Beschichtungspulver vor, das verschiedene Gesichtspunkte, wie optimales Kornspektrum des Pulvergemisches, optimale Ausnutzung des zurückgewonnenen Pulvers, Oberflächenbeschaffenheit des Werkstücks etc., berücksichtigen kann.

Mit Bezug auf Figur 2 ist eine Pulverbeschichtungsanlage gemäß einer weiteren Ausführungsform der Erfindung erläutert. In Figur 2 sind die entsprechenden Komponenten mit denselben Bezugszeichen wie in Figur 1 bezeichnet und werden nicht nochmals erläutert.

Der in Figur 2 gezeigte Pulverkreislauf - bestehend aus dem Frischpulverbehälter 10, dem Mischbehälter 14, dem Pistolenversorgungsbehälter 28, den Beschichtungspistolen 32, von denen der Einfachheit halber nur eine gezeigt ist, der Rückgewinnungsanlage 36 und der Pulverrückführungsleitung 38 zum Mischbehälter 14 - entspricht im wesentlichen dem Pulverkreislauf der Figur 1, mit dem Unterschied, daß in Figur 2 der Pulverrückgewinnungsbehälter 12 in die Rückgewinnungsanlage 36 integriert ist und somit nur ein Pulvermengensensor 22 für das zurückgeführte Pulver vorgesehen ist. Dieser übernimmt zusätzlich die Funktion des vierten Pulvermengensensors 40 aus Figur 1.

Zusätzlich zu dem Pulverkreislauf umfaßt die in Figur 2 gezeigte Pulverbeschichtungsanlage eine "Signalschleife", die im wesentlichen der Regelung der von den Beschichtungspistolen 32 ausgebrachten Pulvermenge dient.

Die Signalschleife umfaßt ein Durchflußsteuergerät 42, einen Injektor 44, vorzugsweise einen geeichten Venturi-Injektor, einen weiteren Pulvermengensensor 46, die Sprühpistole 32 (hier ist beispielhaft nur eine Sprühpistole dargestellt, obwohl in der Preis mehrere Sprühpistolen vorgesehen sein können) zum Abgeben von Beschichtungspulver auf ein zu beschichtendes Werkstück 48 und eine Einrichtung 50 zum Prüfen der Oberfläche des beschichteten Werkstücks 48, insbesondere ein Laser-Schichtdickenmeßgerät.

Die einzelnen Komponenten dieser Signalschleife sind aus dem Stand der Technik bekannt. So ist z.B. in der deutschen Patentanmeldung 197 13 668 eine Steuereinrichtung beschrieben, die sich zur Regelung der Durchflußmenge des Beschichtungspulvers eignet, geeignete Pulvermengensensoren sind in den deutschen Patentanmeldungen 44 06 046 und 196 50 112 beschrieben, und ein Laser-Schichtdickenmeßgerät ist z.B. aus den deutschen Patentanmeldungen 196 06 453 und 196 23 121 bekannt. Auf diese Patentanmeldungen wird Bezug genommen.

Mit dem Schichtdickenmeßgerät 50 wird die Dicke der Oberflächenbeschichtung eines Werkstucks 38 ermittelt, die in der Steuereinrichtung 42 mit einem Grenzwert verglichen wird, um gegebenenfalls über den Venturi-Injektor 44 die Menge des von der Beschichtungspistole 32 ausgebrachten Pulver zu korrigieren. Die von der Beschichtungspistole 32 tatsächlich ausgebrachte Pulvermenge wird von dem Pulvermengensensor 46 erfaßt, dessen Ausgangssignal ebenfalls der Steuereinrichtung 42 zugeführt wird.

Zusätzlich kann das Ausgangssignal von der Schichtdickenmeßeinrichtung 50 dazu verwendet werden, das Mischungsverhältnis aus frischen und zurückgewonnen Pulver einzustellen (nicht gezeigt). Wenn z.B. bei einer bekannten vesprühten Pulvermenge eine Oberflächenbeschichtung zu dick oder zu dünn ist, kann dies auch an einer falschen Pulverzusammensetzung liegen. Und es kann gegebenenfalls günstiger sein, beispielsweise nur die Menge des Frischpulvers zu erhöhen. Wie die jeweiligen Meßergebnisse zu interpretieren sin, weiß der Fachmann auf dem Gebiet der Beschichtungstechnik. Alternativ kann auch eine Einrichtung zum Ermitteln der Oberflächenbeschaffenheit des Werkstücks (nicht gezeigt) eingesetzt werden, wie sie zum Beispiel in der deutschen Patentanmeldung 196 22 429 beschrieben ist, um zu überprüfen, ob mit dem gewählten Verhältnis aus frischem und zurückgewonnenem Beschichtungspulver akzeptable Oberflächen erhalten werden, und um gegebenenfalls das Verhältnis zu korrigieren.

Mit der erfindungsgemäßen Verschachtelung des Pulverkreislaufes zum Einstellen eines optimalen Verhältnisses aus frischem und zurückgewonnen Pulver und des Signalkreislaufes zum Einstellen der optimalen Gesamtmenge des versprühten Beschichtungspulvers wird eine besonders effiziente und gleichzeitig wenig komplexe Pulverbeschichtungsanlage geschaffen.

Die in der vorstehenden Beschreibung, den Ansprüchen und der Zeichnung offenbarten Merkmale können sowohl einzeln als auch in beliebiger Kombination für die Realisierung der Erfindung in ihren verschiedenen Ausgestaltungen von Bedeutung sein.

## Patentansprüche

1. Pulverbeschichtungsanlage mit
einem Frischpulverbehälter (10) zum Aufnehmen von frischem Pulver, einem Rückgewinnungsbehälter (12) zum Aufnehmen von aus einem Beschichtungsvorgang zurückgewonnenem Pulver und einem Mischbehälter (14), der an den Frischpulverbehälter (10) und den Rückgewinnungsbehälter (12) angeschlossen ist,
einer Steuereinrichtung zum Einstellen der Pulvermengenströme von dem Frischpulverbehälter (10) und dem Rückgewinnungsbehälter (12) zu dem Mischbehälter (14) in einem bestimmten Verhältnis aus frischem und wiedergewonnenem Pulver,
einem Frischpulver-Mengensensor (18) und einem RückführungspulverMengensensor (22), die in einem Pulverförderweg (16, 20) zwischen dem Frischpulverbehälter bzw. dem Rückgewinnungsbehälter und dem Mischbehälter angeordnet sind, und
einer Einrichtung zum Ermitteln des Auftragswirkungsgrades der Pulverbeschichtungsanlage,
wobei die Steuereinrichtung mit dem Frischpulver-Mengensensor (18) und dem Rückführungspulver-Mengensensor (22) sowie mit der Einrichtung zum Ermitteln des Auftragswirkungsgrades gekoppelt ist, um abhängig davon die Pulvermengenströme von dem Frischpulverbehälter (10) und dem Rückgewinnungsbehälter (12) zu dem Mischbehälter (14) einzustellen.

2. Pulverbeschichtungsanlage mit
einem Frischpulverbehälter (10) zum Aufnehmen von frischem Pulver, einem Rückgewinnungsbehälter (12) zum Aufnehmen von aus einem Beschichtungsvorgang zurückgewonnenem Pulver und einem Mischbehälter (14), der mit dem Frischpulverbehälter (10) und dem Rückgewinnungsbehälter (12) verbunden ist,
einer Steuereinrichtung zum Einstellen der Pulvermengenströme von dem Frischpulverbehälter (10) und dem Rückgewinnungsbehälter (12) zu dem Mischbehälter (14) in einem bestimmten Verhältnis aus frischem und wiedergewonnenem Pulver,
einem Frischpulver-Mengensensor (18) und einem RückführungspulverMengensensor (22), die in einem Pulverförderweg (16, 20) zwischen dem Frischpulverbehälter bzw. dem Rückgewinnungsbehälter und dem Mischbehälter angeordnet sind, und
einer Oberflächenprüfeinrichtung zum Prüfen der Oberfläche eines beschichteten Gegenstandes (48),
wobei die Steuereinrichtung mit dem Frischpulver-Mengensensor (18) und dem Rückführungspulver-Mengensensor (22) sowie mit der Oberflächenprüfeinrichtung gekoppelt ist, um abhängig davon die Pulvermengenströme von dem Frischpulverbehälter (10) und dem Rückgewinnungsbehälter (12) zu dem Mischbehälter (14) einzustellen.

3. Pulverbeschichtungsanlage nach Anspruch 1 oder 2, **gekennzeichnet** durch einen Mischpulver-Mengensensor (26), der in einem Pulverweg (24) zwischen dem Mischbehälter (2) und wenigstens einem Beschichtungsgerät (32) angeordnet ist.

4. Pulverbeschichtungsanlage nach Anspruch 3, dadurch **gekennzeichnet**, daß die Steuereinrichtung auch mit dem MischpulverMengensensor (26) gekoppelt ist, um die Pulverhöhe in dem Mischbehälter (14) abhängig von den Signalen des Frischpulver-Mengensensors, des Rückführungspulver-Mengensensors (22) und des Mischpulver-Mengensensors (26) zu ermitteln.

5. Pulverbeschichtungsanlage nach Anspruch 3 oder 4, **gekennzeichnet** durch einen Rückgewinnungspulver-Mengensensor (40), der in einem Pulverweg zwischen einer Beschichtungskabine (34) und dem Rückgewinnungsbehälter (12) angeordnet ist, wobei die Steuereinrichtung abhängig von den Signalen von dem MischpulverMengensensor (26) und dem Rückgewinnungspulver-Mengensensor (40) den Auftragswirkungsgrad der Beschichtungsanlage ermittelt.

6. Pulverbeschichtungsanlage nach Anspruch 5, dadurch **gekennzeichnet**, daß die Steuereinrichtung abhängig von dem Auftragswirkungsgrad einen Maximalwert für das Verhältnis der Pulvermengenströme von dem Frischpulverbehälter (10) und dem Rückgewinnungsbehälter (12) zu dem Mischbehälter (14) ableitet.

7. Pulverbeschichtungsanlage nach einem der vorangehenden Ansprüche, **gekennzeichnet** durch einen Pulverhöhensensor in dem Mischbehälter (14).

8. Pulverbeschichtungsanlage nach einem der Ansprüche 2 bis 7, dadurch **gekennzeichnet**, daß die Oberflächenprüfeinrichtung (50) eine Schichtdickenmeßeinrichtung ist.

9. Verfahren zum Speisen von Pulver zu wenigstens einem Beschichtungsgerät (32) in einer Pulverbeschichtungsanlage, bei dem frisches Pulver und zurückgewonnenes Pulver und in einem bestimmten Verhältnis gemischt und in einen Mischbehälter (14) geführt werden und das so gebildete Pulvergemisch dem Beschichtungsgerät (32) zugeführt wird, und bei dem die Pulvermengenströme des frischen und des zurückgewonnenen Pulvers, die in den Mischbehälter gehen, erfaßt werden und der Auftragswirkungsgrad der Pulverbeschichtungsanlage ermittelt wird, um abhängig davon das Verhältnis von zurückgewonnenem zu frischem Pulver einzustellen.

10. Verfahren zum Speisen von Pulver zu wenigstens einem Beschichtungsgerät (32) in einer Pulverbeschichtungsanlage, bei dem frisches Pulver und zurückgewonnenes Pulver und in einem bestimmten Verhältnis gemischt und in einen Mischbehälter (14) geführt werden und das so gebildete Pulvergemisch dem Beschichtungsgerät (32) zugeführt wird, und bei dem die Pulvermengenströme des frischen und des zurückgewonnenen Pulvers, die in den Mischbehälter gehen, erfaßt werden und die Oberfläche eines beschichteten Gegenstandes geprüft wird, um abhängig davon das Verhältnis von zurückgewonnenem zu frischem Pulver einzustellen.

11. Verfahren nach Anspruch 9 oder 10, dadurch **gekennzeichnet**, daß der Pulvermengenstrom erfaßt wird, der von dem Mischbehälter zu dem Beschichtungsgerät geht.

12. Verfahren nach Anspruch 11, dadurch **gekennzeichnet**, daß die Pulverfüllhöhe in dem Mischbehälter (14) abhängig von den Pulvermengenströmen ermittelt wird, die in den und aus dem Mischbehälter fließen.

13. Verfahren nach einem der Ansprüche 9 bis 12, dadurch **gekennzeichnet**, daß ein Maximalwert für das Verhältnis von zurückgewonnenem zu frischem Pulver abhängig von dem Verhältnis der Pulvermengen abgeleitet wird, die dem Beschichtungsgerät zugeführt bzw. aus dem Beschichtungsvorgang zurückgewonnen werden.

14. Verfahren nach einem der Ansprüche 9 bis 13, dadurch **gekennzeichnet**, daß zunächst Frischpulver in den Mischbehälter gespeist wird, bis eine vorgegebene Füllhöhe erreicht ist; das Frischpulver anschließend im wesentlichen vollständig zu dem Beschichtungsgerät weitergefördert und versprüht wird; vorbeigesprühtes Pulver gesammelt und einem Rückgewinnungsbehälter zugeführt wird; und wenn in dem Rückgewinnungsbehälter eine vorgegebene Füllhöhe erreicht ist, zurückgewonnenes Pulver und Frischpulver im wesentlichen gleichzeitig in den Mischbehälter gespeist werden.

15. Verfahren nach einem der Ansprpüche 10 bis 14, dadurch **gekennzeichnet**, daß die Schichtdicke einer Oberflächenbeschichtung des Gegenstandes gemessen wird.

16. Verfahren nach einem der Ansprpüche 10 bis 15, dadurch **gekennzeichnet**, daß die Beschaffenheit der Oberfläche des Gegenstandes ermittelt wird.
